Europäisches Patentamt

**European Patent Office**

Office européen des brevets

(11) Publication number: **0 053 747**
A1

(12)

# EUROPEAN PATENT APPLICATION

(21) Application number: **81109816.9**

(22) Date of filing: **21.11.81**

(51) Int. Cl.³: **B 32 B 29/02**
**B 60 R 13/02, E 04 B 1/62**

(30) Priority: **25.11.80 IT 6879680**

(43) Date of publication of application:
**16.06.82 Bulletin 82/24**

(84) Designated Contracting States:
**DE FR GB**

(71) Applicant: **FIRAB S.p.A. Fabrica Italiana Rivestimenti**
**Autoveicoli Brandizzo**
**Via Nicolao Cena 33**
**I-10032 Brandizzo (Torino)(IT)**

(72) Inventor: **Duployez De Sonnet, Mario**
**Strada ai Ronchi 67**
**I-10100 Torino(IT)**

(74) Representative: **Modiano, Guido et al,**
**MODIANO & ASSOCIATI S.A.S. Via Meravigli, 16**
**I-20123 Milan(IT)**

(54) Thermally and acoustically insulating mouldable self-supportiing material, and method for the manufacture thereof.

(57) The material comprises a corrugated cardboard supporting member (S), preferably of the type including fibers of a thermoplastic polymeric material and coated on at least one side with a heat moldable felt layer (SC₁-SC₂) formed from natural and/or artificial and/or synthetic textile fibers, and heat setting and thermoplastic resins, being also produced as preformed sectional members by hot molding.

Fig. 1

EP 0 053 747 A1

Croydon Printing Company Ltd.

COMPLETE DOCUMENT

This invention relates to a moldable self-supporting material, particularly for manufacturing self-supporting liners for the interiors of automobile vehicles, such as self-supporting roof panels, door panels, rear window decks, and the like, and for the manufacture of self-supporting panels for false ceilings in the construction industry, as well as to a method of manufacturing it.

As is known, self-supporting liners of the above type are currently formed from a moldable support or backing layer whereon an either textile or synthetic in-view layer is deposited with the optional interposition of a padding in the form of a foam layer. With a view to reducing both the weight and cost of currently employed self-supporting liners, the use of liners has been proposed which comprise a cardboard support or backing member, whereon is laid, with the interposition of an adhesive, the either textile or synthetic in-view layer, if desired with the additional interposition of said padding.

The above prior art liner, while providing a solution to the weight reduction problem, is not devoid of many serious drawbacks, and it is, mainly, difficult to mold into deep shapes, while the adhesive is affected by moisture and heat to result in the delamination of the in-view layer from the support or backing layer. The former drawback is particularly disadvantageous because it substantially restricts the utilization of said known material to the construction of flat or shallow elements.

Thus, the task of the present invention is that of eliminating such drawbacks.

Within this task it is an important object of the invention to provide a lightweight thermally and acoustically insulating material for self-supporting liners which is sufficiently elastic to facilitate the installation of elements of a large size, and above all, suitable for hot molding into sectional members which may be deeply dimpled.

Yet another object of this invention is the provision of a material as indicated, which has high thermal and acoustical insulation properties, is light in weight, unaffected by moisture, inexpensive, and of pleasing outside appearance.

According to one aspect of the present invention, these and other objects such as will be apparent from the following detailed description, are achieved by a moldable self-supporting material, particularly for manufacturing self-supporting liners for the compartments of automobile vehicles and self-supporting panels for false ceilings in the building industry, characterized in that it comprises a corrugated cardboard supporting member covered, on at least one side thereof, with a layer of hot moldable felt formed from natural and/or artificial and/or synthetic textile fibers and thermoplastic and heat setting resins.

In particular, the cardboard forming the supporting member is preferably of the type which includes fibers of a thermoplastic polymeric material, thereby the bond between the supporting member and the felt layer(s) is accomplished by melting under hot pressing.

The plasticity feature of the felt layer further allows preforming by direct molding to any depth of profile section to ensure a uniform distribution of the material and complete absence of wrinkles and/or tears from the resulting material. The cardboard may comprise a single corrugated sheet, or a corrugated sheet coupled to one or two flat sheets to form a cardboard of the type having parallel closed cells, the use of cell cardboard being advantageous from the standpoint of structural rigidity, in view of the higher moment of inertia of the structure, and from the standpoint of insulation in view of the presence of air circulation channels. The cardboard may also be, for specially severe applications, of the type having plural corrugations, including cruciform corrugations.

Further features and advantages will become clearly apparent from the detailed description which follows, to be taken in conjunction with the accompanying drawings, given herein by way of example and not of limitation, and where:

Figure 1 is an exploded perspective view showing the structural arrangement of the material in the version thereof having two felt coated sides;

Figure 2 is a schematic sectional view of a press, illustrating the molding procedure for a lining material made of the inventive material;

Figure 3 is a perspective view, partly sectioned, of a preformed element according to the invention, as removed from the molding press; and

Figures 4,5,6,7 and 8 are sectional views of res-

pective modifications of the backing or supporting cardboard.

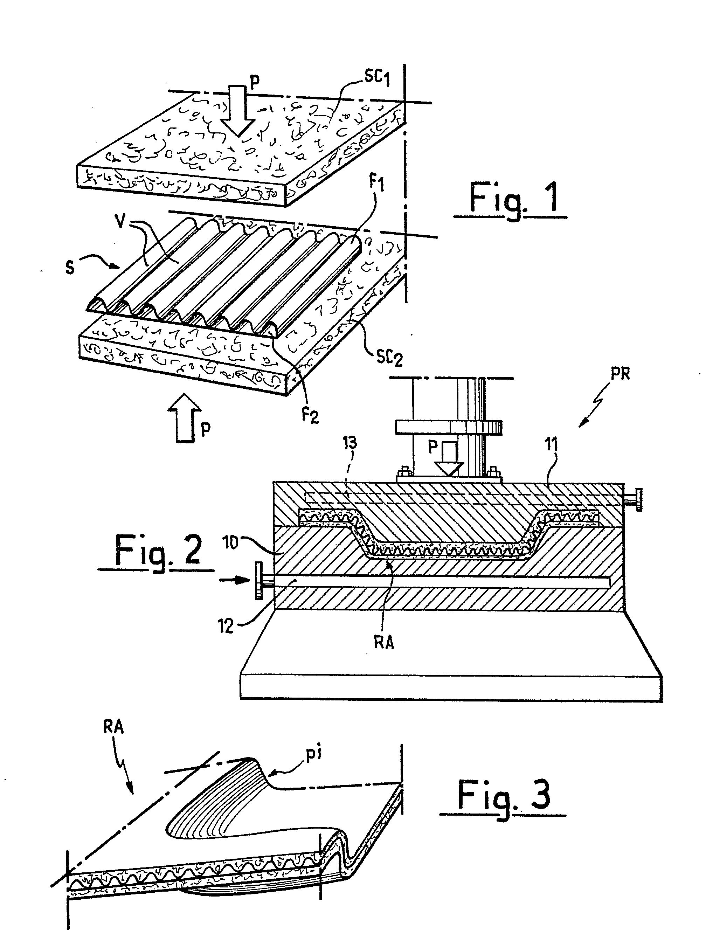

With initial reference to Figures 1 to 3, the character S generally designates a continuous supporting or backing member comprising corrugated cardboard of the type with closed parallel cells resulting from the superimposition of a corrugated sheet $f_1$ onto a flat sheet $f_2$; the cardboard of the supporting member S being preferably of the type including fibers of a thermoplastic polymeric material intermingled with cellulose fibers and optional inert fillers.

According to the invention, on at least one side or face of said supporting member, but advantageously on both sides thereof, as shown in Figure 1, there is applied a covering layer $SC_1$-$SC_2$, respectively comprising a felt formed from natural and/or artificial and/or synthetic fibers and heat setting and thermoplastic resins; said felt, which is known per se, it being formed from textile material waste, industrial cotton, optional inert fillers, and optional resin binders. The supporting and covering layers are successively subjected to a hot pressing force P whichresults in the curing of the heat setting resins and softening of the thermoplastic fibers and resins, thus intimately welding said support and layers together to yield the finished product. The operation is advantageously carried out on a press PR of the type shown in Figure 2 and having heated half molds 10-11, heat being supplied thereto by circulating a fluid through conditioning ducts 12-13 or by some other means, at a temperature in the 140 to 200°C range and under a molding pressure in the 1 to 4 $kg/cm^2$ range.

The moldability features of the covering layers $SC_1 - SC_2$ enable preforming by molding even to deep dimpled profiles without undergoing wrinkling or tearing of the resulting material.

After the releasing from the mold and optional cooling under pressure, the finished product, in the form of a self-supporting coating RA, presents itself as shown in Figure 3 with the required characteristics of rigidity, preformed and provided with exposed surfaces which are perfectly uniform. The coating cross-section shows a uniform distribution of the covering layer material which fills the spaces v included between adjacent corrugations of the support, thus forming a homogeneous structure.

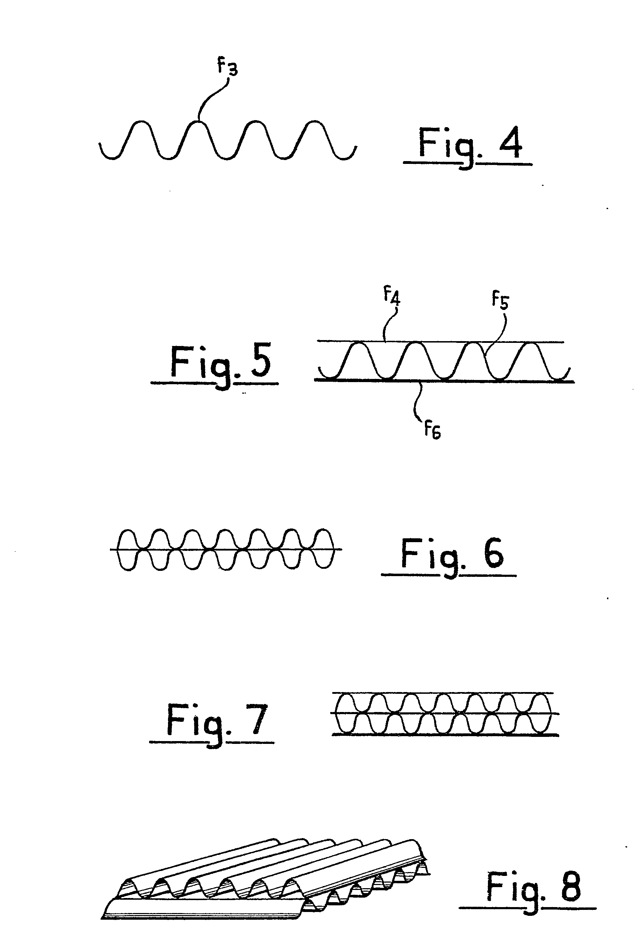

While the utilization of a double sheet cardboard as shown in Figure 1 is advantageous for the formation of the support S, the same -- depending on the final user's requirements -- may be formed from a cardboard having a single corrugated sheet $f_3$ as shown in Figure 4, or from a cardboard of the type comprising a corrugated sheet $f_5$ sandwiched between two flat sheets $f_4 - f_6$, respectively, as in the embodiment of Figure 5, or from different combinations as shown in Figures 6,7 and 8. The utilization of the latter cardboard types is advantageous where a higher rigidity is sought for the finished exposed coating, in view of the higher moment of inertia of the resisting section of said cardboards.

It should be noted that the finished lirer, after removal from the mold, has such features as to permit the direct utilization of screws and rivets, in particular of screws of the self-tapping type, thus facilitating the attachment of any accessories normally provided inside the interior compartment of an automobile vehicle.

Of course, within the principle of the invention, the constructional details and embodiments thereof may be largely modified from the ones described and shown herein by way of example only, without departing from the invention scope.

CLAIMS

1. A moldable self-supporting material, particularly for manufacturing self-supporting liners for the compartments of automobile vehicles and self-supporting panels for false ceilings in the building industry, characterized in that it comprises a corrugated cardboard supporting member (S) covered, on at least one side thereof, with a layer $(SC_1-SC_2)$ of hot moldable felt formed from natural and/or artificial and/or synthetic textile fibers and thermoplastic and heat setting resins.

2. A material according to Claim 1, characterized in that the cardboard forming said supporting member (S) is of the type including fibers of a thermoplastic polymeric material, the bond between said supporting member (S) and the surface covering layers $(SC_1-SC_2)$ being achieved by melting and/or curing with a hot pressing technique.

3. A material according to the preceding claims, characterized in that the cardboard forming said supporting member (S) is of the type including a single corrugated sheet $(f_3)$.

4. A material according to the preceding claims, characterized in that the cardboard forming said supporting member (S) is of the type including a corrugated sheet $(f_5)$ coupled to at least one flat sheet $(f_4, f_6)$, or plural different combinations thereof.

5. A material according to the preceding claims, characterized in that the cross-section of the finished product, following the hot pressing step, has a uniform distribution of the felt of the covering layers (SC$_1$-SC$_2$) into the cells and/or channels of the cardboard forming said supporting member (S).

6. A method for manufacturing a material according to Claims 1 to 5, characterized in that it comprises the step of subjecting said supporting and covering layers (S, SC$_1$-SC$_2$) to a hot molding process on a press having mold halves (10-11) heated to a temperature in the 140 to 200°C range and under a pressure in the 1 to 4 kg/cm$^2$ range.

7. A method according to Claim 6, characterized in that said mold halves (10-11) are contoured to produce a hot molded contoured or profile liner having any dimple depth and/or curvature.

0053747

Fig. 1

Fig. 2

Fig. 3

2,2

$f_3$

Fig. 4

$f_4$    $f_5$

Fig. 5

$f_6$

Fig. 6

Fig. 7

Fig. 8

## 0053747

**European Patent Office**

**EUROPEAN SEARCH REPORT**

Application number

EP 81 10 9816

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| A | FR - A - 1 471 937 (I.N.K.V.) <br> * The whole document * <br><br> -- | 1,4 | B 32 B 29/02 <br> B 60 R 13/02 <br> E 04 B 1/62 |
| A | DE - A - 2 747 739 (PELZ) <br> * Pages 1,2; page 4, lines 4-13; page 5, lines 8-13 * <br><br> -- | 1 | |
| A | FR - A - 2 380 133 (CARTONNERIES REUNIES VOISIN & PASCAL) <br><br> ---- | | **TECHNICAL FIELDS SEARCHED (Int.Cl. ³)** <br><br> B 32 B <br> B 60 R |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 22-03-1982 | VAN THIELEN |

EPO Form 1503.1 06.78